# EUROPEAN PATENT SPECIFICATION

(11) **EP 0 553 542 B1**
(45) Date of publication and mention of the grant of the patent: **22.05.1996**
(21) Application number: 92309219.1
(22) Date of filing: 09.10.1992
(51) Int. Cl.: B60R 21/22

(54) **Improvements in or relating to an air-bag arrangement**
Verbesserungen an einer Air-Bag-Anordnung
Amélioration concernant un coussin gonflable

(30) Priority: 28.01.1992 GB 9201792
(43) Date of publication of application: 04.08.1993
(73) Proprietor: GENERAL ENGINEERING (NETHERLANDS) B.V., NL-3508 AA Utrecht (NL)
(72) Inventor: Skötte, Lars-Gunnar, S-433 338 Partille (SV); Nordin, Stefan, S-441 37 Alingsas (SV); Lindstrom, Martin, S-443 95 Stenkullen (SV)
(74) Representative: Frankland, Nigel Howard

(56) References cited:
- EP-A- 0 344 422
- US-A- 3 810 654
- US-A- 4 003 588
- US-A- 4 944 529
- US-A- 5 022 675

## Description

THE PRESENT INVENTION relates to an air-bag arrangement and more particularly relates to an air-bag arrangement adapted to protect a driver or passenger in a motor vehicle such as a motor car.

It has been proposed to provide an air-bag in a motor car positioned in front of the driver or in front of a passenger of the motor car, the bag being adapted to inflate in the event that an accident arises. The bag thus provides a "cushion" for the driver or passenger.

The design of air-bags is now very sophisticated, and the bag is adapted to be inflated when the driver or passenger is thrown forwardly within the motor vehicle.

Reference may be made to EP-A-0,344,422 which discloses a bag in which parts of the bag are folded together to form a "tuck" by stitching, the stitching forming a "tear seam". The main purpose of this is to control the way that the bag is inflated. Thus the "tear seam" effectively controls the speed of inflation or the direction in which the bag expands during inflation, so that the bag, when it is inflated, does not hit the driver or passenger with a significant force. The "tear seam" is designed to tear or rip, enabling the "tuck" to open out effectively increasing the interior volume of the bag.

One disadvantage of the system of EP-A-O,344,422 is that the "tear seam" comprises stitching which passes through part of the bag which forms the boundary between the interior of the bag and the exterior of the bag. When the "tear seam" tears or rips, it is to be understood that either the thread forming the stitching can break or the fabric in the region of the seam can tear. It is possible that the fabric will tear along the line of the stitching, since the fabric will have been pierced by the needle when the stitches have been put in place, and the fabric may thus have been punctured or weakened in the line of the stitching. However, it is also possible that the fabric adjacent the actual stitching may tear or rip. In any event, it is quite possible that the fabric of the bag may become damaged. If the fabric of the bag is damaged and is apertured, the bag may deflate in an undesirable manner, and the bag will then not provide the desired cushioning effect.

The present invention seeks to provide an improved air-bag arrangement.

According to this invention there is provided an inflatable bag adapted to protect a driver or passenger in a motor vehicle, the bag being formed from one or more elements of fabric, portions of the fabric being secured together by seams, the bag being provided with one or more tearable means designed to break when the bag is exposed to an internal pressure in excess of a predetermined pressure, the tearable means controlling the way the bag is inflated, the interior volume of the bag being greater when the tearable means have broken wherein there are areas of fabric adjacent the seams which areas do not, if apertured or damaged, affect the integrity of the bag, said tearable means being present in said areas of fabric.

It is to be understood that the tearable means may comprise a stitched seam where either the thread forming the seam or the fabric through which the thread passes is adapted to tear, or may comprise a specific portion of fabric provided in the region of a stitched seam which is intended to tear when an appropriate force is applied to the fabric.

Conveniently, the said areas of fabric are under tension when the bag is inflated and define one or more tucks in side walls of the bag.

In one embodiment, the or each tearable means comprises a stitched seam provided adjacent an edge of elements of fabric secured together by the securing seams, there being edge portions of the fabric extending between the securing seams and the edge of the fabric, the "tear seam" being located in said edge portions.

In an alternative embodiment of the invention the or each tearable means is defined by a piece of fabric that extends across and retains a tuck formed in the bag. The piece of fabric may be integral with the fabric of the bag or the piece of fabric may be separate from the fabric of the bag. Preferably the piece of fabric has a weakened portion to facilitate tearing of the fabric, and the weakened part may be constituted by one or more notches formed in the edges of the piece of fabric.

Advantageously, at least one side of the bag is folded to form a tuck so that regions of edge portions of the fabric forming that side of the bag, that is to say portions of the fabric between the edges of the fabric and securing seams provided adjacent the edges of the side of the bag securing that side of the bag to other sides of the bag, are folded to lie adjacent each other, said regions being secured together by said tear seams.

In one embodiment, the said portions of the fabric which do not determine the integrity of the bag are located on the exterior of the bag. Alternatively, the portions of the bag which do not affect the integrity of the bag are located on the interior of the bag.

In one embodiment, the bag is made of a single sheet of fabric of generally cruciform shape.

Alternatively, the bag is made of three sheets of fabric, two sheets forming opposed side walls, and a further sheet forming a top wall, an end and a bottom wall of the bag, in one orientation.

In order that the invention may be more readily understood, and so that further features thereof may be appreciated, the invention will now be described, by way of example, with reference to the accompanying drawings, in which:
FIGURE 1 is a view of a conventional seam as provided in an air-bag,
FIGURE 2 is a view of an alternative form of seam,
FIGURE 3 is a plan view of a "blank" which can be used for forming a bag,
FIGURE 4 is a view of a bag being made from the blank of Figure 3,
FIGURE 5 is a view of the bag of Figure 4 when completed,
FIGURE 6 is a perspective view of another form of bag,
FIGURE 7 is a view of the bag of Figure 6 when turned inside out,
FIGURE 8 is a view, corresponding to Figure 5, illustrating a modified embodiment of the invention,
FIGURE 9 is a cross-sectional view of Figure 8 taken on the line IX-IX,
FIGURE 10 is a plan view of part of the fabric forming the bag of Figures 8 and 9, and
FIGURE 11 is a view of part of a further modified bag in accordance with the invention, with parts thereof cut-away for the sake of clarity of illustration.

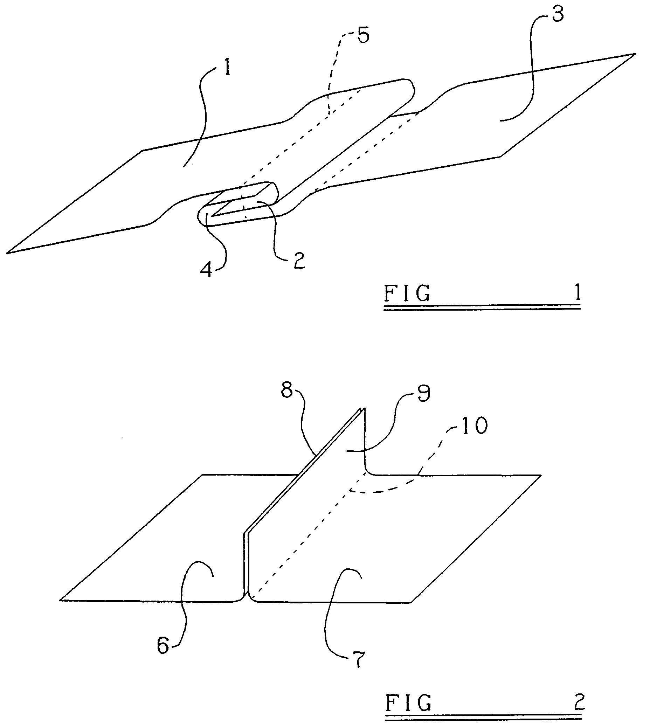

Referring initially to Figure 1 of the drawings, a conventional "interlocked" seam for an air-bag or the like is illustrated. A first sheet of fabric 1 has a terminal edge thereof folded back on itself to form a U-shaped channel 2. A second sheet of fabric 3, to be connected to the first sheet, has a terminal edge thereof folded back to form a U-shaped channel 4.

The folded back edges are then inter-nested so that the two channels 2 and 4 are inter-engaged and then stitching 5 is placed in position extending through four thicknesses of the fabric. Thus, the stitching 5 extends through the parts of the fabric sheet 1 that form both side walls of the channel 2 and through parts of the fabric sheet 3 that form both side walls of the channel 4.

It is to be noted that a seam of this type does not present any exposed free edges of the cloth or fabric.

Figure 2 illustrates an alternate form of seam where two sheets of fabric 6,7 are located with edge portions 8,9 adjacent each other, and a line of stitching 10 is located in position joining the edge portions 8 and 9 together. The stitching is located at a distance from the terminal edge of the edge portions 8 and 9, so the edge portions between the stitching and the edge of the fabric are still clearly identifiable.

It is to be appreciated that if an air-bag is made utilising seams of the type illustrated in Figure 2, the edge portions 8 and 9 do not themselves contribute directly to the integrity of the bag, since the part of the bag that effectively separates the interior of the bag from the exterior of the bag is effectively defined by the fabric sheets 6 and 7. Consequently, if any tearing or ripping occurs to the edge portions 8 or 9, this will not, of itself, cause deflation of an air-bag made from fabric sheets 6 and 7 as illustrated in Figure 2.

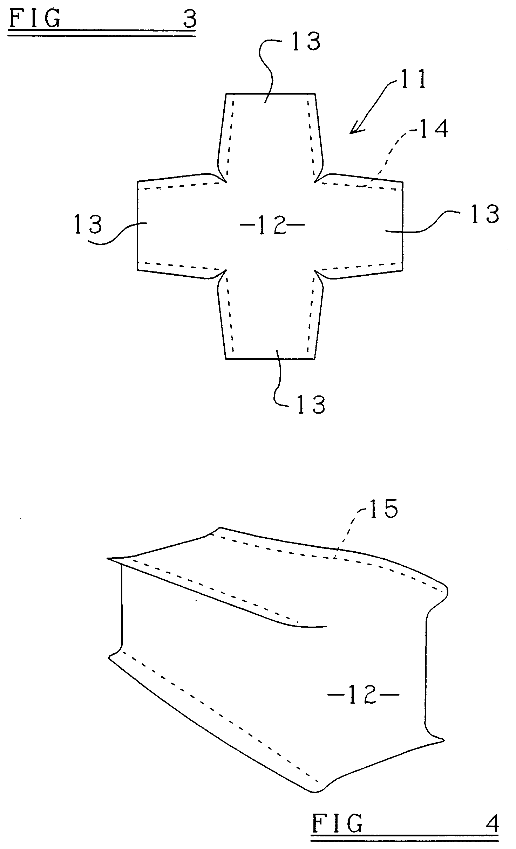

Referring now to Figure 3, a "blank" 11 of fabric is illustrated from which an air-bag may be fabricated. The blank is of generally cruciform shape having a substantially square central region 12 with four orthogonally extending arms 13. Each arm tapers slightly towards its free end.

The "blank" of Figure 3 may be folded to form a bag having the configuration of Figure 4 by folding the four arms 13 to extend parallel with each other in a direction which is perpendicular to the plane of the square central portion 12. The free edges of the arms will then abut each other and stitching may be provided, in the positions indicated by the dotted lines 14 of Figure 3, to constitute seams 15 as shown in Figure 4. The bag is thus formed of a unitary sheet of fabric but edges of the fabric are joined together by securing seams 15. The seams 15 are of general type illustrated in Figure 2, the edge portions of the fabric between the stitching and the edge of the fabric not contributing to the integrity of the bag.

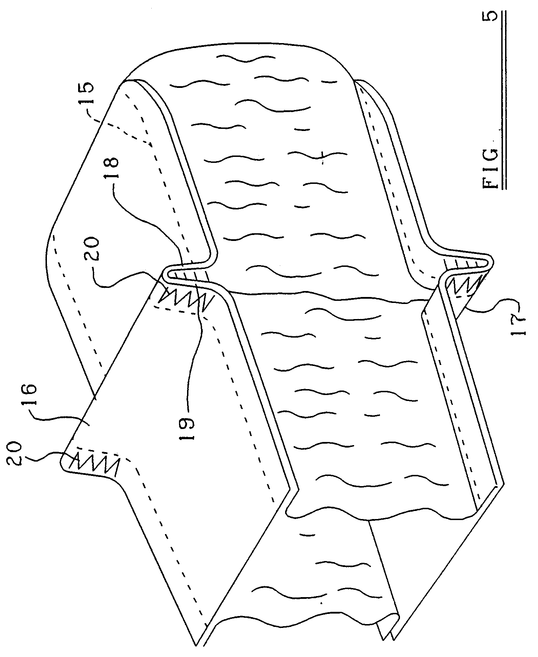

Referring now to Figure 5 of the accompanying drawings, it can be seen that the bag of Figure 4 has been compressed axially, thus forming a tuck 16,17 in the upper and lower walls of the bag. The side walls of the bag will be deformed in a corresponding manner, but will most probably be deformed slightly inwardly of the bag.

It can be seen that the tuck 16 brings together, at either end, regions 18,19 of the projecting edge portions of the fabric of the bag which project beyond the securing seams 15. These abutting regions 18 and 19 are joined together by a zig-zag "tear seam" 20. It can be seen, from Figure 5, that four "tear seams" of this type will be provided in the bag. The "tear seams" maintain the "tucks" and limit the internal volume of the bag.

When the air-bag is inflated and thus has the condition illustrated in Figure 5, the "tear seams" will initially be placed under slight tension. As the pressure in the bag continues to rise the "tear seams" will rip or tear, thus releasing the tucks 16,17 and effectively increasing the interior volume of the bag. The "tear seams" are so located that inflation of the bag is controlled so that the bag does not hit the passenger or driver to be protected by the bag.

The "tear seams" will rip or tear, either by the thread forming the stitching breaking, or by the fabric tearing in the region of the stitching or near the stitching. It can be seen that even if the ripping of the "tear seams" causes apertures to form within the material of the bag, these apertures will only be in that part of the material of the bag between the securing seam 15 and the edge of the fabric, in other words in a position corresponding to the edge portions 8 and 9 of Figure 2, and this will not influence the integrity of the bag.

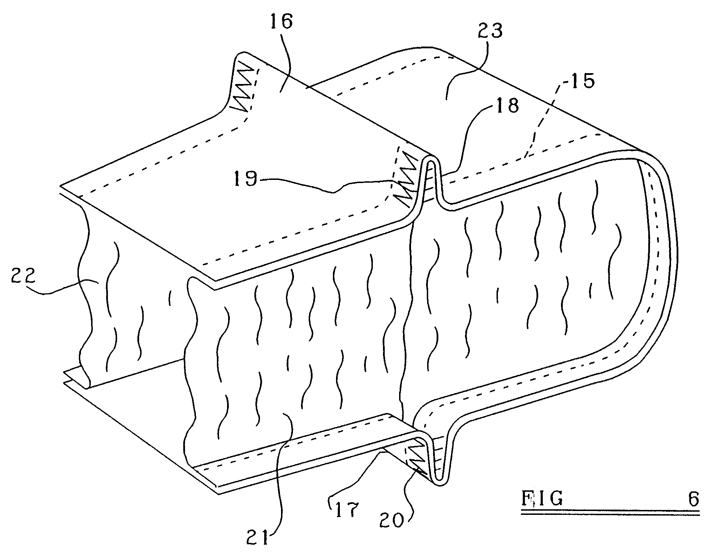

Figure 6 illustrates an alternate form of bag, similar to that shown in Figure 5, which comprises two side sheets 21,22 which each correspond with one of the arms 13 of the blank of Figure 3, and a single top, end and bottom sheet 23 which corresponds to the two other arms and the central square region of the blank of Figure 3.

It can be seen that the top sheet is stitched to each side sheet along the top of the bag, across the end of the bag and along the bottom of the bag, in the orientation illustrated in Figure 6.

The remaining features of the bag are as described with reference to the bag of Figure 5.

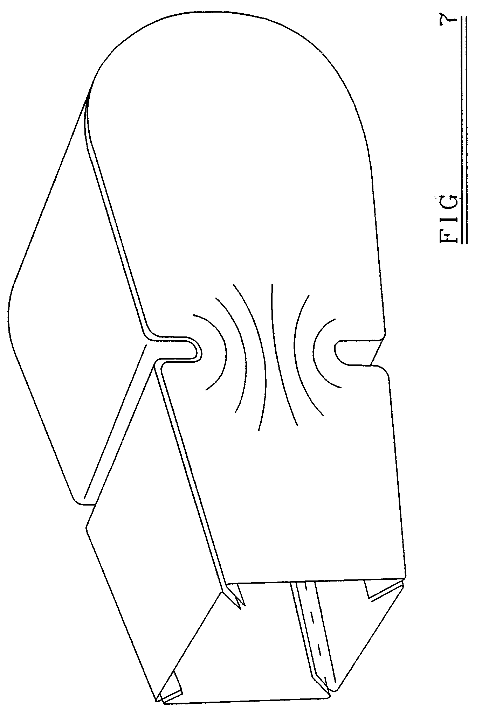

The bag of Figure 6 may be inverted (or turned inside-out) so that the tucks 16,17 are on the interior of the bag, as shown in Figure 7. This provides the bag with a smoother exterior and minimises the risk of injury to a person who impinges the bag.

It has been found that various types of stitching may be used to form the "tear seams" 20 as described above. Whilst reference has been made to "zig-zag" "tear seams" various forms of stitching may be used comprising one or more straight seams extending parallel with the edge of the fabric, one or more straight seams extending parallel but perpendicularly to the edge of the fabric, or a "castellated" seam. It has been found that these stitched seams do not operate in a totally consistent manner in that the maximum load necessary to cause a stitched seam of this type to tear as compared with the average load, may be significantly greater than the average load. Typically, the maximum load is of the order of two times the average load.

It has been found that more consistent results can be obtained when the tearable means is formed of a piece of fabric that extends across and retains a tuck formed in the bag.

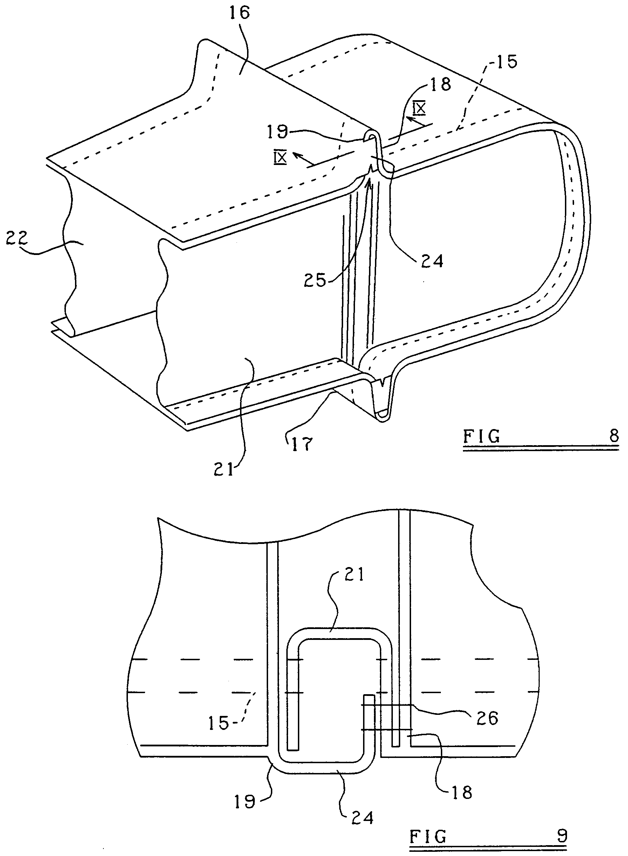

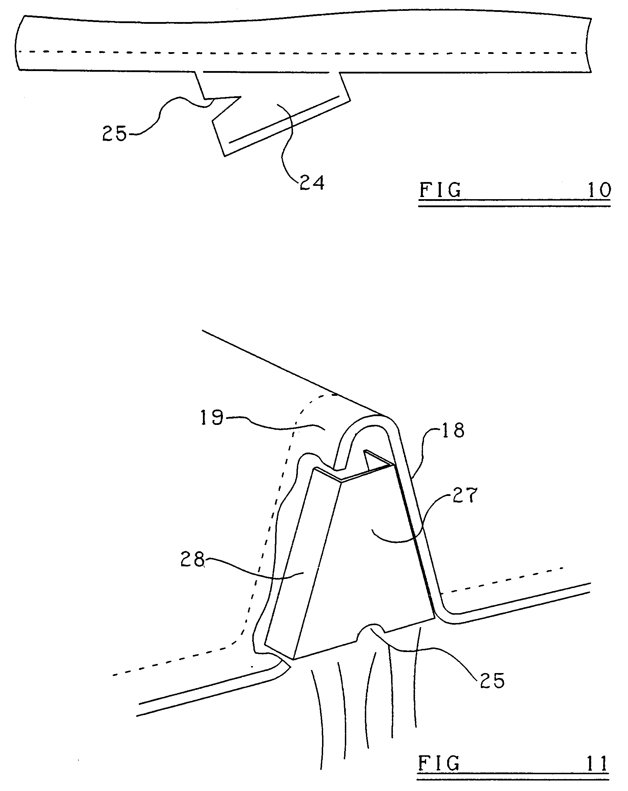

Referring now to Figure 8, which illustrates a modified embodiment of the bag illustrated in Figure 6 (the same reference numerals apply to the same parts), the bag is provided with two opposed tucks 16,17 of the type described above. Referring specifically to tuck 16, the regions 18 and 19 of the projecting edge portions of the fabric of the bag which extend beyond the securing seams 15 in the region of the tuck are joined together by a piece of fabric 24 which is formed integrally with the region 19, and which has a free end portion which is stitched or otherwise secured to the region 18. The piece of fabric 24 is provided with a weakened central region defined by a notch 25 formed in one side of the piece of fabric. The arrangement is such that when the bag is inflated and subjected to an internal pressure in excess of a predetermined limit, the piece of fabric 24 will tear transversely, the tear commencing at the notch 25. The tear will follow the warp or the weft of the fabric. It has been found that providing a tearable means of this type gives more consistent results in that, in a batch of bags, the maximum force necessary to cause the tearable means to be actuated is very close to the average force for the batch. It can be seen that the tuck 17 is provided with a similar tearable means. Figure 9 provides a sectional view of the arrangement, illustrating how the additional piece of fabric 24 is stitched to the region 18 by a double seam 26. Figure 10 illustrates the edge of the piece of fabric used to form the upper part of the bag illustrated in Figure 8, showing the additional piece of fabric 24 with the notch 25.

It is to be appreciated that whilst, in the embodiment described with reference to Figures 8 to 10, the piece of fabric 24 forming the tearable means is formed integrally with the fabric forming the rest of the bag, the fabric forming the tearable means could comprise a separate element of fabric 27 as illustrated in Figure 11, the extra piece of fabric again having a notch 25 and being secured to the abutting regions 18 and 19 by appropriate seams, one of which, 28, is illustrated schematically.

Whilst the piece of fabric that forms the tearable means has been shown as having one notch formed in one side, the piece of fabric could have two opposed notches formed in the opposed side edges, or could have a central aperture, preferably of "diamond" shape.

A bag having a tearable means as illustrated in Figures 8 to 10 or as illustrated in Figure 11 could again be turned inside-out, so as to resemble the bag shown in Figure 7.

The features disclosed in the foregoing description, in the following Claims and/or in the accompanying drawings may, both separately and in any combination thereof, be material for realising the invention in diverse forms thereof.

## Claims

1. An inflatable bag adapted to protect a driver or passenger in a motor vehicle, the bag being formed from one or more elements of fabric (12,13,21,22,23), portions of the fabric being secured together by seams (15), the bag being provided with one or more tearable means (20,24,27) designed to break when the bag is exposed to an internal pressure in excess of a predetermined pressure, the tearable means (20,24,27) controlling the way the bag is inflated, the interior volume of the bag being greater when the tearable means (20,24,27) have broken, characterised in that there are areas (18,19) of fabric adjacent the seams(15) which areas do not, if apertured or damaged, affect the integrity of the bag, said tearable means (20,24,27) being present in said areas (18,19) of fabric.

2. A bag according to Claim 1 wherein the said areas (18,19) of fabric are under tension when the bag is inflated and define one or more tucks (16,17) in side walls of the bag.

3. A bag according to Claim 1 or 2 wherein the or each of said tearable means comprises a stitched seam (20) provided adjacent an edge of elements of fabric secured together by the securing seams (15), there being edge portions of the fabric extending between the securing seams (15) and the edge of the fabric, the seam being located in said edge portions (18,19).

4. A bag according to Claim 1 or 2 wherein the or each tearable means is defined by a piece of fabric (24,27) that extends across and retains a tuck (16,17) formed in the bag.

5. A bag according to Claim 4 wherein the piece of fabric (24) is integral with the fabric of the bag.

6. A bag according to Claim 4 wherein the piece of fabric (27) is separate from the fabric of the bag.

7. A bag according to any one of Claims 4 to 6 wherein the piece of fabric (24,27) has a weakened portion to facilitate tearing of the fabric.

8. A bag according to Claim 7 wherein the piece of fabric (24,27) has one or more notches (25) formed in the edges thereof to constitute said weakened part.

9. A bag according to any one of the preceding Claims wherein at least one side of the bag is folded to form a tuck (16,17) so that regions (18,19) of edge portions of the fabric forming that side of the bag, that is to say portions of the fabric between the edges of the fabric and securing seams (15) provided adjacent the edges of the side of the bag securing that side of the bag to other sides of the bag, are folded to lie adjacent each other, said regions (18,19) being secured together by said tearable means (20,24,27).

10. A bag according to any one of Claims 1 to 9 wherein the areas of the bag which do not affect the integrity of the bag are located on the interior of the bag.

## Patentansprüche

1. Aufblasbarer Sack, der dazu bestimmt ist, einen Fahrer oder Beifahrer in einem Motorfahrzeug zu schützen, wobei; der Sack aus wenigstens einem Stoffelement (12, 13, 21, 22, 23) gebildet ist; Bereiche des Stoffs durch Nähte (15) zusammengehalten sind; der Sack mit wenigstens einem aufreißbaren Mittel (20, 24, 27) versehen ist, das so ausgelegt ist, daß es zerreißt, wenn der Sack einem Innendruck ausgesetzt ist, der größer ist als ein vorbestimmter Druck; das aufreißbare Mittel (20, 24, 27) die Art und Weise steuert, in der der Sack aufgeblasen wird; das Innenvolumen des Sacks größer ist, wenn das aufreißbare Mittel (20, 24, 27) aufgerissen ist; dadurch gekennzeichnet, daß Zonen (18, 19) des Stoffs benachbart zu den Nähten (15) vorhanden sind, die, wenn sie geöffnet oder beschädigt sind, die Unversehrtheit des Sacks nicht beeinflussen, wobei das (die) aufreißbare(n) Mittel (20, 24, 27) in diesen Zonen (18, 19) des Stoffs vorhanden ist (sind).

2. Sack nach Anspruch 1, dadurch gekennzeichnet, daß die Zonen (18, 19) des Stoffs unter Spannung stehen, wenn der Sack aufgeblasen ist, und wenigstens eine Falte (16, 17) in Seitenwänden des Sacks bilden.

3. Sack nach Anspruch 1 oder 2, dadurch gekennzeichnet, daß das oder jedes aufreißbare Mittel eine geheftete Naht (20) beinhaltet, die benachbart zu einem Rand von Stoffelementen liegt, die durch die Befestigungsnähte (15) zusammengehalten werden, wobei sich Randbereiche des Stoffs zwischen den Befestigungsnähten (15) und dem Rand des Stoffs erstrecken und sich die Naht in diesen Randbereichen (18, 19) befindet.

4. Sack nach Anspruch 1 oder 2, dadurch gekennzeichnet, daß das oder jedes aufreißbare Mittel durch ein Stück Stoff (24, 27) gebildet wird, das eine in dem Sack gebildete Falte (16, 17) zugammenhält und sich über diese erstreckt.

5. Sack nach Anspruch 4, dadurch gekennzeichnet, daß das Stück Stoff (24) mit dem Stoff des Sacks ein Teil bildet.

6. Sack nach Anspruch 4, dadurch gekennzeichnet, daß das Stück Stoff (27) von dem Stoff des Sacks getrennt ist.

7. Sack nach einem der Ansprüche 4 bis 6, dadurch gekennzeichnet, daß das Stück Stoff (24, 27) einen geschwächten Abschnitt aufweist, um das Aufreißen des Stoffs zu erleichtern.

8. Sack nach Anspruch 7, dadurch gekennzeichnet, daß das Stück Stoff (24, 27) wenigstens einen Einschnitt (25) aufweist, der in dessen Rändern ausgebildet ist, um den besagten geschwächten Teil zu bilden.

9. Sack nach einem der vorangehenden Ansprüche, dadurch gekennzeichnet, daß wenigstens eine Seite des Sacks unter Bildung einer Falte (16, 17) gefaltet ist, so daß Bereiche (18, 19) von Randabschnitten des diese Seite des Sacks bildenden Stoffs, d.h. Abschnitte des Stoffs zwischen den Rändern des Stoffs und Befestigungsnähten (15), die benachbart zu den Rändern der Seite des Sacks liegen und die Seite des Sacks an anderen Seiten des Sacks halten, so gefaltet werden, daß sie einander benachbart liegen, wobei diese Bereiche (18, 19) durch das (die) aufreißbare(n) Mittel (20, 24, 27) aneinander gehalten werden.

10. Sack nach einem der Ansprüche 1 bis 9, dadurch gekennzeichnet, daß die Zonen des Sacks, die die Unversehrtheit des Sacks nicht beeinflussen, an der Innenseite des Sacks angeordnet sind.

## Revendications

1. Coussin gonflable, adapté à la protection d'un chauffeur ou d'un passager d'un véhicule à moteur, ce coussin étant formé à partir d'un ou de plusieurs éléments de tissu (12, 13, 21, 22, 23), ces éléments étant maintenus ensemble par des coutures (15), le coussin étant pourvu d'un ou plusieurs, moyens de déchirure (20, 24, 27) prévus pour céder lorsque le coussin est soumis à une pression interne supérieure à une pression prédéterminée, ces moyens de déchirure (20, 24, 27) contrôlant la façon dont le coussin est gonflé, le volume intérieur du coussin étant plus grand lorsque les moyens de déchirure (20, 24, 27) ont cédé , caractérisé en ce qu'il existe des zones (18, 19) de tissu adjacentes aux coutures (15), lesquelles zones n'affectent pas l'intégrité du coussin si elles sont ouvertes ou endommagées, lesdits moyens de déchirure (20, 24, 27) étant présents dans ces zones (18, 19) de tissu.

2. Coussin selon la revendication 1, dans lequel lesdites zones (18, 19) de tissu sont sous tension lorsque le coussin est gonflé et définissent un ou plusieurs remplis (16, 17) dans les parois latérales du coussin.

3. Coussin selon les revendications 1 ou 2, dans lequel le ou chacun des moyens de déchirure comprend une couture piquée (20), pratiquée près d'un bord des éléments de tissu maintenus ensemble par les coutures de maintien (15), des parties du bord de tissu s'étendant entre les coutures (15) et le bord du tissu, la couture étant située dans lesdites zones (18, 19).

4. Coussin selon les revendications 1 ou 2, dans lequel le ou chacun des moyens de déchirure est constitué par une pièce de tissu (24, 27) qui s'étend en travers d'un rempli (16, 17) formé dans le coussin et le retient.

5. Coussin selon la revendication 4, dans lequel la pièce de tissu (24) fait partie intégrante du tissu du coussin.

6. Coussin selon la revendication 4, dans lequel la pièce de tissu (27) est séparée du tissu du coussin.

7. Coussin selon une quelconque des revendications 4 à 6, dans lequel la pièce de tissu (24,27) comporte une partie affaiblie qui facilite la déchirure du tissu.

8. Coussin selon la revendication 7, dans lequel la pièce de tissu (24,27) est crantée en un ou plusieurs endroits sur ces bords pour constituer ladite partie affaiblie.

9. Coussin selon une quelconque des revendications précédentes, dans lequel au moins un côté du coussin est plié pour former un rempli (16, 17) de sorte que les zones (18,19) des bords du tissu formant ce côté du coussin, c'est-à-dire les parties entre les bords du tissu et les coutures de maintien (15), pratiquées près des bords pour lier ce côté du coussin aux autres côtés, sont pliées pour se trouver adjacentes les unes aux autres, lesdites zones (18, 19) étant maintenues ensemble par lesdits moyens de déchirure (20, 24, 27).

10. Coussin selon une quelconque des revendications 1 à 9, dans lequel les zones du coussin, qui n'affectent pas son Intégrité, sont situées à l'intérieur du coussin.
